# FASCICULE DE BREVET EUROPEEN

(11) **EP 4 312 685 B1**
(45) Date de publication et mention de la délivrance du brevet: **16.04.2025**
(21) Numéro de dépôt: 22718088.2
(22) Date de dépôt: 22.03.2022
(51) Int. Cl.: A47J 45/06

(54) **RECIPIENT DE CUISSON MUNI D'UNE POIGNEE FIXEE PAR DEUX RIVETS SUPERPOSES**
KOCHGEFÄSS MIT EINEM GRIFF, DER DURCH ZWEI ÜBEREINANDERLIEGENDE NIETEN BEFESTIGT IST
COOKING VESSEL PROVIDED WITH A HANDLE FASTENED BY TWO SUPERPOSED RIVETS

(30) Priorité: 24.03.2021 FR 2102950
(43) Date de publication de la demande: 07.02.2024
(73) Titulaire: SEB S.A., 69130 Ecully (FR)
(72) Inventeur: LORTHIOIR, Christophe, 74150 BLOYES (FR)
(74) Mandataire: SEB Développement
(86) Numéro de dépôt international: PCT/EP2022/057482
(87) Numéro de publication internationale: WO 2022/200346

(56) Documents cités:
- FR-A- 1 258 876
- FR-A- 515 459
- KR-A- 20140 034 697
- US-A1- 2015 114 973
- HAWKINS COOKERS LIMITED: "COOKWARE CATALOG 2020", 1 April 2020 (2020-04-01), pages 1 - 36, XP055868413, Retrieved from the Internet <URL:https://www.hawkinscookers.com/downloads/ckw_catalog.pdf> [retrieved on 20211202]

## Description

### Domaine technique

La présente invention concerne un récipient de cuisson comportant une poignée rivetée, notamment une poêle, une casserole, une sauteuse ou un faitout.

### Etat de la technique

Il est connu du document US20150114973 un récipient de cuisson comportant une paroi latérale et une poignée. La poignée comprend une pièce de liaison fixée sur la paroi latérale. La pièce de liaison comporte une portion axiale qui s'étend parallèlement à la paroi latérale et qui est fixée sur la paroi latérale par au moins deux rivets. Les au moins deux rivets sont agencés dans un plan horizontal, de manière suffisamment espacés pour obtenir une bonne fixation de la poignée. Ainsi, la portion axiale doit présenter dans le plan horizontal une largeur importante pour implanter les aux moins deux rivets. La largeur importante de la portion axiale nécessite d'adapter la forme de la portion axiale à la forme spécifique de la paroi latérale de ce récipient de cuisson, notamment le rayon de courbure de portion axiale qui doit être identique au rayon de courbure de la paroi latérale.

Les récipients de cuisson tel que décrits dans le document US20150114973 sont généralement conçus pour former une gamme de récipients de cuisson de même type mais de tailles différentes. Par exemple, la gamme de récipients de cuisson est du type casserole et les casseroles présentent des diamètres différents. Ainsi, pour chaque diamètre correspondant à un récipient de cuisson, il faut concevoir et fabriquer une poignée munie d'une portion de liaison spécifique dont le rayon de courbure est adapté au rayon de courbure de la paroi latérale.

De plus, la multiplication des poignées munies d'une portion de liaison spécifique limite la possibilité d'automatiser la production de tels récipients de cuisson. Le document KR20140034697A décrit un autre exemple de récipient de cuisson.

### Résumé de l'invention

La présente invention vise à remédier à ces inconvénients.

Le problème technique à la base de l'invention consiste à proposer un récipient de cuisson qui présente une conception simple et économique à mettre en œuvre.

Un autre but de l'invention est de proposer un récipient de cuisson qui présente une construction sûre et durable dans le temps.

A cet effet, l'invention a pour objet un récipient de cuisson comportant une paroi latérale et une poignée, ladite poignée comprenant une pièce de liaison fixée sur la paroi latérale, ladite pièce de liaison comportant une portion axiale qui s'étend parallèlement à la paroi latérale et qui est fixée sur la paroi latérale par au moins deux rivets, caractérisé en ce que les aux moins deux rivets sont agencés dans au moins deux plans horizontaux H1, H2 parallèles, séparés par une distance D et en ce que la portion axiale s'étend latéralement à un plan vertical, perpendiculaire à la paroi latérale, sur une largeur inférieure à 30 millimètres, de préférence inférieure à 25 millimètres.

Ainsi, les aux moins deux rivets sont agencés de manière superposée pour permettre d'obtenir une portion axiale étroite qui présente une largeur faible. En conséquence, une telle portion axiale de largeur faible permet de rendre la poignée compatible avec les différentes tailles de récipients de cuisson d'une même gamme.

Une telle standardisation de la poignée pour une ou plusieurs gammes de récipients de cuisson permet d'envisager un montage automatisé, notamment par robot, de la pose des rivets.

Avantageusement, la poignée comporte un plan de symétrie PS vertical, les au moins deux rivets étant agencés dans le plan de symétrie PS vertical.

Une telle disposition permet d'obtenir une répartition équilibrée des efforts lors de la manipulation du récipient de cuisson.

De préférence, la portion axiale s'étend latéralement, de part et d'autre du plan de symétrie PS vertical pour présenter une largeur L constante.

Une telle construction est très économe en matière, notamment lorsque la portion axiale est réalisée à partir d'un feuillard métallique.

Selon l'invention, la portion axiale de la pièce de liaison comporte une surface externe qui présente, dans un plan de coupe transversal horizontal, une forme en arc de cercle de rayon R compris entre 7 et 12 centimètres, ladite surface externe prenant appui au moins partiellement sur la paroi latérale.

Ainsi, un tel rayon est un bon compromis pour que la même portion axiale puisse être fixée à chacun des récipients de cuisson d'une même gamme présentant une forme circulaire, notamment une gamme de casseroles allant d'un diamètre de 14 centimètres jusqu'à un diamètre de 28 centimètres.

De manière avantageuse, la surface externe de la portion axiale repose sur la paroi latérale sur une surface de contact SC qui présente dans un plan de coupe horizontal une largeur de contact LC supérieure à la moitié de la largeur L de la portion axiale.

De préférence, la distance D est supérieure à 10 millimètres, de préférence supérieure à 15 millimètres.

Ainsi, les aux moins deux rivets sont suffisamment espacés pour obtenir une fixation résistante aux efforts lors de la manipulation du récipient de cuisson.

Avantageusement, la pièce de liaison est réalisée à partir d'un feuillard métallique en acier inoxydable d'épaisseur supérieure à deux millimètres.

Ainsi, la pièce de liaison est réalisée de manière très économique.

De préférence, chaque rivet comporte un fût présentant un diamètre inférieur à 6 millimètres.

Un tel diamètre de fût est faible et permet un rivetage simultané de deux rivets pour un process de montage simple.

Avantageusement, le récipient de cuisson comporte deux rivets.

Une telle disposition permet d'obtenir le meilleur compromis résistance de la fixation/coût.

De préférence, la poignée comporte une partie de préhension qui est assemblée sur la pièce de liaison par surmoulage.

Avantageusement, la pièce de liaison comporte une portion radiale qui s'étend radialement par rapport à la paroi latérale à partir d'une extrémité de jonction avec la portion axiale, l'extrémité étant agencée à proximité immédiate d'un bord supérieur du récipient de cuisson.

Ainsi, lors de l'empilage d'un récipient de cuisson de petit diamètre dans un récipient de cuisson de plus grand diamètre, le récipient de cuisson de petit diamètre pourra s'imbriquer de manière importante jusqu'à ce la portion radiale vienne en contact avec le bord supérieur du récipient de cuisson de plus grand diamètre.

De préférence, la portion radiale s'étend radialement par rapport à la paroi latérale de manière inclinée vers le haut.

Ainsi, lors de l'empilage d'un récipient de cuisson de petit diamètre dans un récipient de cuisson de plus grand diamètre, le récipient de cuisson de petit diamètre pourra s'imbriquer de manière encore plus importante jusqu'à ce la portion radiale vienne en contact avec le bord supérieur du récipient de cuisson de plus grand diamètre.

De manière avantageuse, la portion radiale forme avec un plan horizontal, dans un plan de coupe vertical, un angle supérieur à 20°.

Avantageusement, le récipient de cuisson est une poêle, une casserole, une sauteuse ou un faitout.

De manière avantageuse, le récipient de cuisson comprend une surface interne qui comporte un revêtement ou un traitement de surface.

De manière avantageuse, le récipient de cuisson comprend une surface interne réalisée en aluminium, la surface interne comportant un revêtement antiadhésif.

De manière avantageuse, le récipient de cuisson comprend une surface interne réalisée en acier inoxydable, la surface interne étant polie.

L'invention concerne également un ensemble formé par au moins deux récipients de cuisson comportant une paroi latérale et une même poignée, chaque récipient de cuisson étant tel que précédemment décrit.

Le système de fixation de la poignée de chaque récipient de cuisson est particulièrement compact et permet l'empilage d'un récipient de cuisson de petit diamètre dans un récipient de cuisson de plus grand diamètre, le petit diamètre et le plus grand diamètre pouvant être proche, notamment de l'ordre de deux centimètres.

Les têtes des au moins deux rivets du récipient de cuisson de plus grand diamètre sont agencées selon une ligne verticale de contact avec le récipient de cuisson de petit diamètre avec lequel il est empilé. Ainsi, la portion axiale est étroite pour présenter une zone de contact concentrée verticalement entre le récipient de cuisson de petit diamètre et le récipient de cuisson de plus grand diamètre.

Avantageusement, chaque paroi latérale des au moins deux récipients de cuisson présente une hauteur h identique.

Ainsi, lors de l'empilage d'un récipient de cuisson de petit diamètre dans un récipient de cuisson de plus grand diamètre, le récipient de cuisson de petit diamètre peut reposer à plat dans le récipient de cuisson de plus grand diamètre, la portion radiale du récipient de cuisson de petit diamètre pouvant passer au-dessus du bord supérieur du récipient de cuisson de plus grand diamètre.

En conséquence, la stabilité de l'empilage est améliorée et le risque de détérioration du récipient de cuisson de plus grand diamètre par le récipient de cuisson de petit diamètre est très réduit.

Avantageusement, dans le cas où la pièce de liaison comporte une portion radiale qui s'étend radialement par rapport à la paroi latérale à partir d'une extrémité de jonction avec la portion axiale, l'extrémité étant agencée à proximité immédiate d'un bord supérieur du récipient de cuisson, la portion radiale du récipient de cuisson de petit diamètre peut plus facilement passer au-dessus du bord supérieur du récipient de cuisson de plus grand diamètre.

De manière encore plus avantageuse, dans le cas où la portion radiale s'étend radialement par rapport à la paroi latérale de manière inclinée vers le haut, la portion radiale du récipient de cuisson de petit diamètre peut encore plus facilement passer au-dessus du bord supérieur du récipient de cuisson de plus grand diamètre.

Il est aussi décrit un ensemble formé par au moins deux récipients de cuisson comportant une paroi latérale de même hauteur et une même poignée, ladite poignée comprenant une pièce de liaison fixée sur la paroi latérale, ladite pièce de liaison comportant une portion axiale qui s'étend parallèlement à la paroi latérale et qui est fixée sur la paroi latérale, la pièce de liaison comportant une portion radiale qui s'étend radialement par rapport à la paroi latérale à partir d'une extrémité de jonction avec la portion axiale, l'extrémité étant agencée à proximité immédiate d'un bord supérieur du récipient de cuisson.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
[Fig.1] La [Fig.1] est une vue en perspective d'un récipient de cuisson selon un premier mode particulier de réalisation de l'invention, le récipient de cuisson étant une casserole de diamètre 20 centimètres,
[Fig.2] La [Fig.2] est une vue en coupe partielle suivant le plan de coupe vertical II-II du récipient de cuisson de la [Fig.1],
[Fig.3] La [Fig.3] est une vue en coupe partielle suivant le plan de coupe horizontal III-III du récipient de cuisson de la [Fig.1],
[Fig.4] La [Fig.4] est une vue en coupe partielle suivant le plan de coupe horizontal III-III d'un récipient de cuisson de la même gamme que le récipient de cuisson de la [Fig.1], le récipient de cuisson étant une casserole de diamètre 16 centimètres,
[Fig.5] La [Fig.5] est une vue en coupe partielle suivant le plan de coupe horizontal III-III d'un récipient de cuisson de la même gamme que le récipient de cuisson de la [Fig.1], le récipient de cuisson étant une casserole de diamètre 28 centimètres.
[Fig.6] La [Fig.6] est une vue en coupe partielle suivant le plan de coupe vertical VI-VI du récipient de cuisson de la [Fig.1] et d'un récipient de cuisson de plus petit diamètre, notamment une casserole de diamètre 18 centimètres, les deux récipients de cuisson étant empilés.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "haut", "bas", "avant", "arrière", "longitudinal", "transversal", employés pour décrire le récipient de cuisson font référence à ce récipient de cuisson en situation d'usage, lorsqu'il repose à plat sur un plan de travail ou un appareil de chauffage.

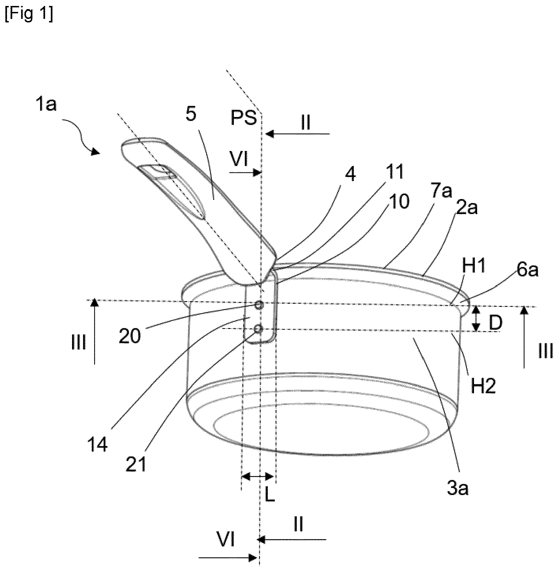

Dans un premier mode de réalisation représenté aux figures 1 à 3, un récipient de cuisson 1a qui est une casserole, comporte une calotte 2a de diamètre 20 centimètres munie d'une paroi latérale 3a et une poignée 4. La calotte 2a est réalisée par emboutissage d'un disque en aluminium. La poignée 4 comporte une partie de préhension 5 et une pièce de liaison 10. La pièce de liaison 10 est fixée sur la paroi latérale 3a. La pièce de liaison 10 comporte une portion radiale 11 qui s'étend radialement par rapport à la paroi latérale 3a, de manière inclinée vers le haut par rapport à un plan sensiblement horizontal, parallèle au plan de pose de la calotte 2a. La portion radiale 11 forme avec un plan horizontal, dans un plan de coupe vertical, un angle α égal à 25°. La partie de préhension 5 est assemblée sur la portion radiale 11 de la pièce de liaison 10 par surmoulage.

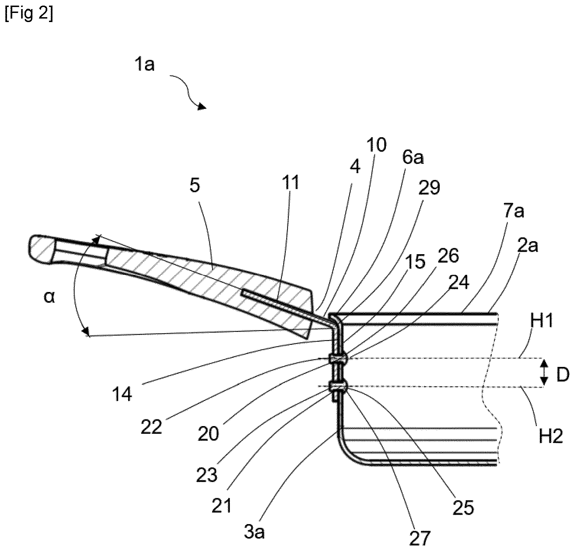

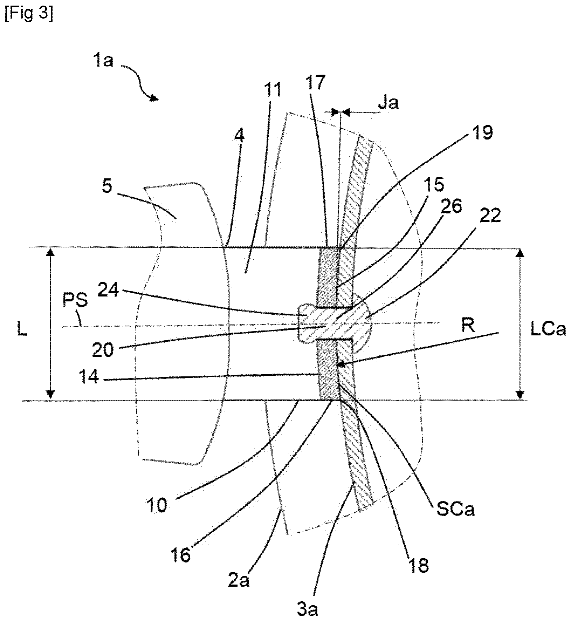

La pièce de liaison 10 comporte une portion axiale 14 qui s'étend parallèlement à la paroi latérale 3a de manière sensiblement verticale. La portion axiale 14 de la pièce de liaison 10 est fixée à la paroi latérale 3a par deux rivets 20, 21 agencé dans deux plans horizontaux H1, H2 parallèles. Les deux plans horizontaux H1, H2 parallèles sont séparés par une distance D égale à 15 millimètres ([Fig.2]). La poignée 4 comporte un plan de symétrie PS vertical. Les deux rivets 20, 21 sont disposés dans le plan de symétrie PS vertical ([Fig.2]). Chaque rivet 20, 21 comporte une tête 22, 23 agencée à l'intérieur de la calotte 2a du récipient de cuisson 1a ([Fig.3]) et un bouterollage 24, 25 qui s'étend vers l'extérieur de la calotte 2a du récipient de cuisson 1a, radialement à la paroi latérale 3a. Le bouterollage 24, 25 est le résultat de l'opération de sertissage de l'extrémité libre du rivet 20, 21, opposé à la tête 22, 23, à l'aide d'une bouterolle, une fois le rivet 20, 21 assemblé sur la calotte 2a et la pièce de liaison 10. Chaque rivet 20, 21 comporte un fût 26, 27 présentant un diamètre égal à 4 millimètres.

La pièce de liaison 10 est réalisée à partir d'un feuillard métallique en acier inoxydable d'épaisseur égale à 3 millimètres et de largeur L égale à 25 millimètres. Ainsi, la portion axiale 14 s'étend vers le bas et de part et d'autre du plan de symétrie PS vertical pour présenter une largeur L égale à 25 millimètres. Dans un plan de coupe horizontal, perpendiculaire au plan de symétrie PS, la portion axiale 14 de la pièce de liaison 10 comporte une surface externe qui présente une forme en arc de cercle de rayon R égal à 10 centimètres ([Fig.3]).

La portion axiale 14 comporte deux bords latéraux 16, 17 munis chacun d'une arête externe 18, 19 orientée vers la calotte 2a. Le rayon R de la portion axiale 14 étant égal au rayon de la calotte 2a, il n'existe, après assemblage, aucun jeu Ja entre la surface externe 15 de la portion axiale 14 et la calotte 2a. La surface externe 15 repose sur la calotte 2a sur une surface de contact SCa qui présente dans un plan de coupe horizontal une largeur de contact LCa égale à la largeur L de la portion axiale 14.

La pièce de liaison 10 comporte une portion radiale 11 qui s'étend radialement par rapport à la paroi latérale 3a à partir d'une extrémité 29 ([Fig.2]) de jonction avec la portion axiale 14, l'extrémité 29 étant agencée à proximité immédiate d'un bord supérieur 7a du récipient de cuisson 1a. La paroi latérale 3a est prolongée vers le haut par une portion recourbée 6a vers l'extérieur. L'extrémité 29 de jonction est agencée directement sous la portion recourbée 6a.

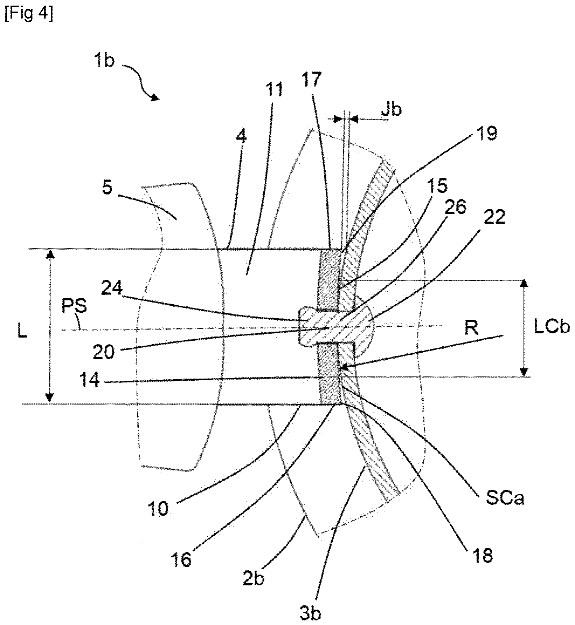

Dans un deuxième mode de réalisation illustré à la [Fig.4], un récipient de cuisson 1b qui est également une casserole, comporte une calotte 2b de diamètre 16 centimètres munie d'une paroi latérale 3b et de la poignée 4. La portion axiale 14 de la pièce de liaison 10 est fixée à la paroi latérale 3b par les deux rivets 20, 21, de la même manière que pour le récipient de cuisson 1a. Le rayon R de la portion axiale 14 étant supérieur au rayon de la calotte 2b, il existe après assemblage un jeu Jb entre chaque arête externe 18, 19 et la calotte 2b. La surface externe 15 de la portion axiale 14 repose sur la calotte 2b sur une surface de contact SCb qui présente dans un plan de coupe horizontal une largeur de contact LCb supérieure à la moitié de la largeur L de la portion axiale 14. Ceci est rendu possible par l'effort de placage de la calotte 2b sur la portion axiale 14 par les deux rivets 20, 21. En effet, une fois les rivets 20, 21 sertis, la paroi latérale 3b de la calotte 2b est légèrement déformée pour augmenter la surface de contact SCb. Une telle surface de contact SCb entre la portion axiale 14 et la calotte 3b est suffisante pour garantir la tenue de la fixation dans le temps d'une casserole de petit diamètre qui présente une faible capacité de chargement. Une faible capacité de chargement induit des efforts limités lors de la manipulation du récipient de cuisson.

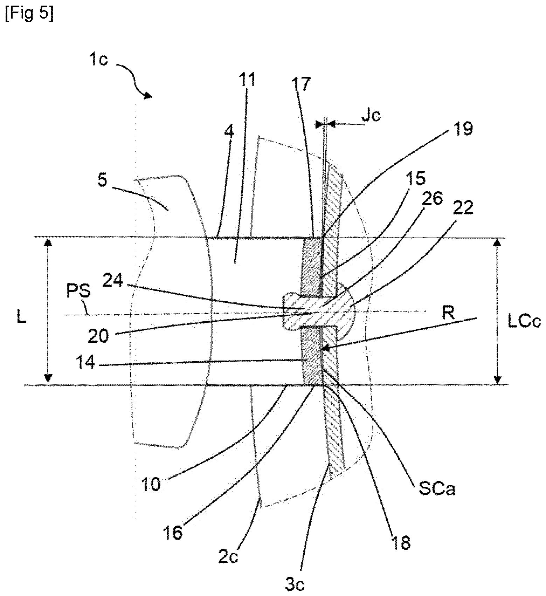

Dans un troisième mode de réalisation illustré à la [Fig.5], un récipient de cuisson 1c qui est également une casserole, comporte une calotte 2c de diamètre 28 centimètres munie d'une paroi latérale 3c et de la poignée 4. La portion axiale 14 de la pièce de liaison 10 est fixée à la paroi latérale 3c par les deux rivets 20, 21, de la même manière que pour le récipient de cuisson 1a. Le rayon R de la portion axiale 14 étant inférieur au rayon de la calotte 2c, il existe avant assemblage, dans le plan de symétrie PS, un jeu Jc entre la surface externe 15 de la portion axiale 14 et la calotte 2c. La surface externe 15 de la portion axiale 14 repose sur la calotte 2c sur une surface de contact SCc qui présente dans un plan de coupe horizontal une largeur de contact LCc. Avant le sertissage des deux rivets 20, 21, un effort est appliqué sur la portion axiale 14 et sur la calotte 2c pour réduire, voire supprimer le jeu Jc. Ainsi, une fois les rivets 20, 21 sertis, la paroi latérale 3c de la calotte 2c et la portion axiale 14 sont légèrement déformées pour augmenter la surface de contact SCc de telle manière à ce que la largeur de contact LCc soit quasiment égale à la largeur L de la portion axiale 14. Une telle surface de contact SCc entre la surface externe 15 de la portion axiale 14 et la calotte 2c est nécessaire pour garantir la tenue de la fixation dans le temps d'une casserole de grand diamètre qui présente une capacité de chargement importante.

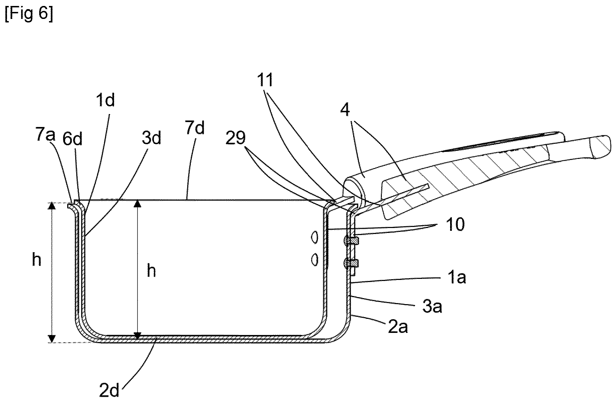

Tel que visible à la [Fig.6], un récipient de cuisson 1d qui est une casserole, comportant une calotte 2d de diamètre 18 centimètres munie d'une paroi latérale 3d et une poignée 4. La paroi latérale 3d est prolongée vers le haut par une portion recourbée 6d vers l'extérieur. La pièce de liaison 10 fixée à la calotte 3d comporte la portion radiale 11 qui s'étend radialement par rapport à la paroi latérale 3d à partir de l'extrémité 29 de jonction. L'extrémité 29 de jonction de la poignée 4 est agencée directement sous la portion recourbée 6d, à proximité immédiate d'un bord supérieur 7d du récipient de cuisson 1d. La portion radiale 11 s'étend radialement par rapport à la paroi latérale 3d, de manière inclinée vers le haut par rapport à un plan sensiblement horizontal, parallèle au plan de pose de la calotte 2d. La portion radiale 11 forme avec un plan horizontal, dans un plan de coupe vertical, un angle α égal à 25°. Le récipient de cuisson 1d est rangé par empilage dans le récipient de cuisson 1a qui comporte la calotte 2a de diamètre 20 centimètres munie de la paroi latérale 3a. La paroi latérale 3a et la paroi latérale 3d présente une même hauteur h.

Ainsi, les récipients de cuisson 1a, 1b, 1c, 1d muni de la même poignée 4 présente une fixation rivetée de la poignée 4 sûre et durable dans le temps.

Bien entendu, l'invention n'est nullement limitée au mode de réalisation décrit et illustré qui n'a été donné qu'à titre d'exemple.

Ainsi, dans une variante de réalisation non illustrée, la poignée 4 comporte une partie de préhension courte formant une anse munie d'une ouverture centrale et la partie radiale présente une forme en U agencée en une demi-périphérie de l'ouverture centrale.

## Revendications

1. Récipient de cuisson (1a, 1b, 1c, 1d) comportant une paroi latérale (3a, 3b, 3c, 3d) et une poignée (4), ladite poignée (4) comprenant une pièce de liaison (10) fixée sur la paroi latérale (3a, 3b, 3c, 3d), ladite pièce de liaison (10) comportant une portion axiale (14) qui s'étend parallèlement à la paroi latérale (3a, 3b, 3c, 3d) et qui est fixée sur la paroi latérale (3a, 3b, 3c, 3d) par au moins deux rivets (20, 21), les aux moins deux rivets (20, 21) étant agencés dans au moins deux plans horizontaux (H1, H2) parallèles, séparés par une distance (D) **caractérisé en ce que** la portion axiale (14) s'étend latéralement à un plan vertical, perpendiculaire à la paroi latérale (3a, 3b, 3c, 3d), sur une largeur (L) inférieure à 30 millimètres, de préférence inférieure à 25 millimètres, la portion axiale (14) de la pièce de liaison (10) comportant une surface externe (15) qui présente, dans un plan de coupe transversal horizontal, une forme en arc de cercle de rayon (R) compris entre 7 et 12 centimètres, ladite surface externe (15) prenant appui au moins partiellement sur la paroi latérale (3a, 3b, 3c, 3d) .

2. Récipient de cuisson (1a, 1b, 1c, 1d) selon la revendication 1, **caractérisé en ce que** la poignée (4) comporte un plan de symétrie (PS) vertical, les au moins deux rivets (20, 21) étant agencés dans le plan de symétrie (PS) vertical.

3. Récipient de cuisson (1a, 1b, 1c, 1d) selon la revendication 2, **caractérisé en ce que** la portion axiale (14) s'étend latéralement, de part et d'autre du plan de symétrie (PS) vertical pour présenter une largeur (L) constante.

4. Récipient de cuisson (1a, 1b, 1c, 1d) selon l'une quelconque des revendications 1 à 3, **caractérisé en ce que** la distance (D) est supérieure à 10 millimètres, de préférence supérieure à 15 millimètres.

5. Récipient de cuisson (1a, 1b, 1c, 1d) selon l'une quelconque des revendications 1 à 4, **caractérisé en ce que** la pièce de liaison (10) est réalisée à partir d'un feuillard métallique en acier inoxydable d'épaisseur supérieure à 2 millimètres.

6. Récipient de cuisson (1a, 1b, 1c, 1d) selon l'une quelconque des revendications 1 à 5, **caractérisé en ce que** chaque rivet (20, 21) comporte un fût (26) présentant un diamètre inférieur à 6 millimètres.

7. Récipient de cuisson (1a, 1b, 1c, 1d) selon l'une quelconque des revendications 1 à 6, **caractérisé en ce que** la poignée (4) comporte une partie de préhension (5) qui est assemblée sur la pièce de liaison (10) par surmoulage.

8. Récipient de cuisson (1a, 1b, 1c, 1d) selon l'une quelconque des revendications 1 à 7, **caractérisé en ce qu'**il est une poêle, une casserole, une sauteuse ou un faitout.

9. Récipient de cuisson (1a, 1d) selon la revendication 1, **caractérisé en ce que** la pièce de liaison (10) comporte une portion radiale (11) qui s'étend radialement par rapport à la paroi latérale (3a, 3d) à partir d'une extrémité (29) de jonction avec la portion axiale (14), l'extrémité (29) étant agencée à proximité immédiate d'un bord supérieur (7a, 7d) du récipient de cuisson (1a, 1d).

10. Récipient de cuisson (1a, 1d) selon la revendication 9, **caractérisé en ce que** la portion radiale (11) s'étend radialement par rapport à la paroi latérale (3a, 3d) de manière inclinée vers le haut.

11. Ensemble formé par au moins deux récipients de cuisson (1a, 1b, 1c, 1d) comportant une calotte (2a, 2b, 2c, 2d) munie d'une paroi latérale (3a, 3b, 3c, 3d) et une poignée (4), chaque récipient de cuisson (1a, 1b, 1c, 1d) étant conforme à l'une quelconque des revendications 1 à 10.

12. Ensemble formé par au moins deux récipients de cuisson (1a, 1d) selon la revendication 11, **caractérisé en ce que** chaque paroi latérale (3a, 3d) des au moins deux récipients de cuisson (1a, 1d) présente une hauteur (h) identique.

## Patentansprüche

1. Kochbehälter (1a, 1b, 1c, 1d), beinhaltend eine Seitenwand (3a, 3b, 3c, 3d) und einen Griff (4), wobei der Griff (4) ein Verbindungsstück (10) umfasst, das an der Seitenwand (3a, 3b, 3c, 3d) befestigt ist, wobei das Verbindungsstück (10) einen axialen Abschnitt (14) beinhaltet, der sich parallel zu der Seitenwand (3a, 3b, 3c, 3d) erstreckt und der an der Seitenwand (3a, 3b, 3c, 3d) durch mindestens zwei Nieten (20, 21) befestigt ist, wobei die mindestens zwei Nieten (20, 21) in mindestens zwei parallelenhorizontalen Ebenen (H1,H2) angeordnet sind,die durch einen Abstand (D) beabstandet sind, **dadurch gekennzeichnet, dass** der axiale Abschnitt (14) sich seitlich zu einer vertikalen Ebene, senkrecht zu der Seitenwand (3a, 3b, 3c, 3d), über einer Breite (L) kleiner als 30 Millimeter, vorzugsweise kleiner als 25 Millimeter erstreckt, wobei der axiale Abschnitt (14) des Verbindungsstücks (10) eine externe Oberfläche (15) beinhaltet, die in einer horizontalen Querschnittsebene eine Kreisbogenform mit Radius (R) zwischen 7 und 12 Millimetern aufweist, wobei die externe Oberfläche (15) mindestens teilweise an der Seitenwand (3a, 3b, 3c, 3d) anliegt.

2. Kochbehälter (1a, 1b, 1c, 1d) nach Anspruch 1, **dadurch gekennzeichnet, dass** der Griff (4) eine vertikale Symmetrieebene (PS) beinhaltet, wobei die mindestens zwei Nieten (20, 21) in der vertikalen Symmetrieebene (PS) angeordnet sind.

3. Kochbehälter (1a, 1b, 1c, 1d) nach Anspruch 2, **dadurch gekennzeichnet, dass** der axiale Abschnitt (14) sich beiderseits seitlich der vertikalen Symmetrieebene (PS) erstreckt, um eine konstante Breite (L) aufzuweisen.

4. Kochbehälter (1a, 1b, 1c, 1d) nach einem der Ansprüche 1 bis 3, **dadurch gekennzeichnet, dass** der Abstand (D) größer als 10 Millimeter, vorzugsweise größer als 15 Millimeter ist.

5. Kochbehälter (1a, 1b, 1c, 1d) nach einem der Ansprüche 1 bis 4, **dadurch gekennzeichnet, dass** das Verbindungsstück (10) ausgehend von einem Metallband aus Edelstahl mit einer Dicke größer als 2 Millimetern hergestellt ist.

6. Kochbehälter (1a, 1b, 1c, 1d) nach einem der Ansprüche 1 bis 5, **dadurch gekennzeichnet, dass** jede Niete (20, 21) eine Hülse (26) beinhaltet, die einen Durchmesser kleiner als 6 Millimeter aufweist.

7. Kochbehälter (1a, 1b, 1c, 1d) nach einem der Ansprüche 1 bis 6, **dadurch gekennzeichnet, dass** der Griff (4) ein Greifteil (5) beinhaltet, das durch Überformung an dem Verbindungsstück (10) montiert ist.

8. Kochbehälter (1a, 1b, 1c, 1d) nach einem der Ansprüche 1 bis 7, **dadurch gekennzeichnet, dass** er eine Pfanne, ein Topf, eine Schwenkpfanne oder ein Kochtopf ist.

9. Kochbehälter (1a, 1d) nach Anspruch 1, **dadurch gekennzeichnet, dass** das Verbindungsstück (10) einen radialen Abschnitt (11) beinhaltet, der sich in Bezug auf die Seitenwand (3a, 3d) ausgehend von einem Ende (29) des Übergangs zu dem axialen Abschnitt (14) radial erstreckt, wobei das Ende (29) in unmittelbarer Nähe eines oberen Rands (7a, 7d) des Kochbehälters (1a, 1d) angeordnet ist.

10. Kochbehälter (1a, 1d) nach Anspruch 9, **dadurch gekennzeichnet, dass** sich der radiale Abschnitt (11) in Bezug auf die Seitenwand (3a, 3d) auf geneigte Weise nach oben erstreckt.

11. Anordnung, gebildet aus mindestens zwei Kochbehältern (1a, 1b, 1c, 1d), die eine Schale (2a, 2b, 2c, 2d) beinhalten, die mit einer Seitenwand (3a, 3b, 3c, 3d) und einem Griff (4) ausgestattet ist, wobei jeder Kochbehälter (1a, 1b, 1c, 1d) einem der Ansprüche 1 bis 10 entspricht.

12. Anordnung, gebildet aus mindestens zwei Kochbehältern (1a, 1d) nach Anspruch 11, **dadurch gekennzeichnet, dass** jede Seitenwand (3a, 3d) der mindestens zwei Kochbehälter (1a, 1d) eine identische Höhe (h) aufweist.

## Claims

1. Cooking vessel (1a, 1b, 1c, 1d) comprising a side wall (3a, 3b, 3c, 3d) and a handle (4), said handle (4) comprising a connecting part (10) fastened to the side wall (3a, 3b, 3c, 3d), said connecting part (10) comprising an axial portion (14) which extends parallel to the side wall (3a, 3b, 3c, 3d) and which is fastened to the side wall (3a, 3b, 3c, 3d) by at least two rivets (20, 21), the at least two rivets (20, 21) being arranged in at least two parallel horizontal planes (H1, H2), separated by a distance (D), **characterised in that** the axial portion (14) extends laterally to a vertical plane, perpendicular to the side wall (3a, 3b, 3c, 3d), over a width (L) of less than 30 millimetres, preferably less than 25 millimetres, the axial portion (14) of the connecting part (10) comprising an external surface (15) which, in a horizontal cross-sectional plane, has an arc shape with a radius (R) between 7 and 12 centimetres, said external surface (15) bearing at least partially on the side wall (3a, 3b, 3c, 3d).

2. Cooking vessel (1a, 1b, 1c, 1d) according to claim 1, **characterised in that** the handle (4) comprises a vertical plane of symmetry (PS), the at least two rivets (20, 21) being arranged in the vertical plane of symmetry (PS).

3. Cooking vessel (1a, 1b, 1c, 1d) according to claim 2, **characterised in that** the axial portion (14) extends laterally on either side of the vertical plane of symmetry (PS) so as to have a constant width (L).

4. Cooking vessel (1a, 1b, 1c, 1d) according to any one of claims 1 to 3, **characterised in that** the distance (D) is greater than 10 millimetres, preferably greater than 15 millimetres.

5. Cooking vessel (1a, 1b, 1c, 1d) according to any one of claims 1 to 4, **characterised in that** the connecting part (10) is made from a metal strip of stainless steel with a thickness greater than 2 millimetres.

6. Cooking vessel (1a, 1b, 1c, 1d) according to any one of claims 1 to 5, **characterised in that** each rivet (20, 21) comprises a shank (26) with a diameter of less than 6 millimetres.

7. Cooking vessel (1a, 1b, 1c, 1d) according to any one of claims 1 to 6, **characterised in that** the handle (4) comprises a gripping part (5) which is joined to the connecting part (10) by overmoulding.

8. Cooking vessel (1a, 1b, 1c, 1d) according to any one of claims 1 to 7, **characterised in that** it is a frying pan, a saucepan, a sauté pan, or a stewpot.

9. Cooking vessel (1a, 1d) according to claim 1, **characterised in that** the connecting part (10) comprises a radial portion (11) which extends radially with respect to the side wall (3a, 3d) from an end (29) joining with the axial portion (14), the end (29) being arranged in the immediate vicinity of an upper edge (7a, 7d) of the cooking vessel (1a, 1d).

10. Cooking vessel (1a, 1d) according to claim 9, **characterised in that** the radial portion (11) extends radially with respect to the side wall (3a, 3d) in an upwardly inclined manner.

11. Assembly formed by at least two cooking vessels (1a, 1b, 1c, 1d), comprising a bowl (2a, 2b, 2c, 2d) provided with a side wall (3a, 3b, 3c, 3d) and a handle (4), each cooking vessel (1a, 1b, 1c, 1d) being in accordance with any one of claims 1 to 10.

12. Assembly formed by at least two cooking vessels (1a, 1d) according to claim 11, **characterised in that** each side wall (3a, 3d) of the at least two cooking vessels (1a, 1d) has an identical height (h).
